# EUROPEAN PATENT SPECIFICATION

(11) **EP 2 803 301 B1**
(45) Date of publication and mention of the grant of the patent: **17.08.2016**
(21) Application number: 13735832.1
(22) Date of filing: 09.01.2013
(51) Int. Cl.: A47J 31/44, A47J 31/36

(54) **BEVERAGE PACKAGE DROPPING STRUCTURE IN BEVERAGE EXTRACTION APPARATUS**
STRUKTUR ZUM ABWERFEN VON GETRÄNKEVERPACKUNGEN IN EINER GETRÄNKEEXTRAKTIONSVORRICHTUNG
STRUCTURE DE CHUTE D'EMBALLAGE DE BOISSONS DANS UN APPAREIL D'EXTRACTION DE BOISSON

(30) Priority: 13.01.2012 CN 201210011397
(43) Date of publication of application: 19.11.2014
(73) Proprietor: Ningbo Quanjing Electric Technology Co. Ltd., Zhejiang 315324 (CN)
(72) Inventor: JING, Yudong, Cixi Zhejiang 315324 (CN); CHEN, Jianxin, Cixi Zhejiang 315324 (CN)
(74) Representative: Orr, Robert
(86) International application number: PCT/CN2013/000015
(87) International publication number: WO 2013/104265

(56) References cited:
- EP-A1- 1 721 553
- EP-A1- 2 077 087
- WO-A1-2005/058111
- WO-A1-2008/096385
- WO-A1-2010/032271
- CN-A- 101 073 470
- CN-A- 102 068 204
- CN-A- 102 160 754
- CN-A- 102 613 903
- CN-U- 201 879 468
- CN-U- 201 879 468
- CN-U- 202 515 442

## Description

### Field of the Invention

The present invention relates to a capsules rejection mechanism in a beverage extraction device, where the beverage extraction device mainly refers to a coffeemaker.

### Description of the Prior Art

As one type of beverage brewing devices, a coffeemaker mainly has two beverage brewing directions, i.e., horizontal and vertical directions. A coffeemaker of brewing in the horizontal direction mainly comprises a first frame and a second frame, wherein the first frame is positioned inside the front portion of a base, while the second frame is positioned inside the back portion of the base and can movable forward and backward relative to the first frame, and both the frames are air-tightly enclosed to form an enclosed extraction chamber after the second frame moves forward to the first frame. To be convenient for operation, the existing coffeemakers generally have a function of automatic capsules rejection.

For example, a Chinese Utility Model Patent CN201044719Y (Patent No.: ZL200720110811.2), titled Capsules Automatically Rejecting Mechanism of Coffeemaker. The coffeemaker comprises a base, a first frame, a second frame and a driving system. A chamber capable of accommodating a capsule is provided on the first frame, while the second frame is a plate; two sides of a second frame are movably connected with a jaw respectively; the front portion of each jaw has a limiting part, the two limiting parts face each other and define a space between them for holding the capsule, and the front portions of the jaws can open or close relative to the second frame; first shafts are installed on the front of the jaws, and second shafts are installed on the rear of the jaws; two pairs of guiding grooves are arranged on the housing for guiding the upper and lower portions of the corresponding jaws; each pair of the guiding grooves consists of an upper guiding groove and a lower guiding groove; under the guiding and fitting of each pair of the guiding grooves and the corresponding first shafts, at least the front portions of the jaws are driven to complete one opening and closing relatively to the second frame when the second frame completes one whole backward movement; a compressed spring is disposed inside the chamber of the first component; when the second frame moves backward, the compressed spring exert an elastic force to the capsule, so that the capsule may move backward along with the second frame and fall off. The driving system drives the second frame to move and under the fit of the first shafts and the guiding grooves, the front portions of the jaws can open or close in due time, so that the capsule may fall off from the limiting parts.

The foregoing coffeemaker is just suitable for capsule made of hard materials on its partial body and circular edge. A plurality of Pores is densely distributed on the front and rear surface of such a capsule for water to pass through. The kind of capsule has high intensity and is unlikely to deform, so the capsule may be bounced off from the chamber just by providing a spring inside the chamber of the first frame. If a capsule is paper-packaged and accommodated with tightly compressed coffee powder therein, the capsule cannot be bounced off from the chamber by a spring alone, this is because such a capsule will become soft after extraction. Therefore, for coffeemakers using this type of capsules, it is necessary to improve the capsules rejection mechanism.

### Summary of the Invention

It is an object of the present invention to provide a capsules rejection mechanism in a beverage extraction device with a novel and rational configuration and easier delivery and rejection of capsules.

For achieving the above stated object, a capsules rejection mechanism in a beverage extraction device, comprises: a housing having a front portion and a back portion; a first frame positioned inside a front portion of the housing, having a front side wall, an outlet, and a chamber for holding a capsule with a circular edge; a second frame having an inlet, a left side and a right side, disposed inside a back portion of the housing and being movable forward and backward relative to the first frame; two jaws, each located at one of left and right sides of the second frame, and the two jaws being movable forward and backward together with the second frame, each jaw having a front portion, a first shaft and a second shaft, the front portion of each jaw extending to the front of the second frame to together form a clamp for holding the capsule, the first shaft and the second shaft respectively protruding vertically at the front and the rear of each jaw; and the housing further having two guiding grooves respectively at one side of the second frame for guiding the first shaft and the second shaft of each jaw when the first shaft and the second shaft sliding inside the corresponding guiding groove; when the first shaft sliding along the guiding groove, the second frame driving the front portions of the jaws to complete one opening and one closing relative to the second frame during the second frame completing one whole forward and backward movement; characterized in that the capsule rejection mechanism further comprises a pushing plate having a front surface disposed inside the chamber and being movable forward and backward, a plurality of apertures are provided on the pushing plate running through along the axis of the housing and communicating with the outlet for liquid to pass through, two backward pushing rods are provided on the front surface of the pushing plate, each backward pushing rod movably passes through the front side wall of the first frame; an elastic element, enabling the pushing plate to have a tendency to move backward away from the chamber; two guiding plates respectively located at one of left and right sides of the second frame, the front end of each guiding plate is positioned with the end of the backward pushing rod outside of the rear wall of the chamber, a trip hole is provided on each guiding plate arranged along the axis of the housing, the first shaft and the second shaft of each jaw pass through each trip hole slideable inside each trip hole, each first shaft touches the foremost end of each trip hole when the second frame moves forward to make the capsule attach to the pushing plate.

Each guiding groove consists of a straight rear groove having a front end, a straight front groove having a rear end, an inclined middle groove and an outer middle groove; a rear end of each straight front groove communicates to two passages, one passage communicates with a front end of the straight rear groove passing through the inclined middle groove, for the first shaft to slide from the straight rear groove into the straight front groove passing through the inclined middle groove, another passage communicates with the front end of the straight rear groove passing through the outer middle groove, for the first shaft to slide from the straight front groove into the straight rear groove passing through the outer middle groove; the inclined groove slants from the front end of the straight rear groove outwardly to the straight front groove, the outer middle groove is located outer of the straight rear groove () and the inclined middle groove, the bottom surface of the outer middle groove is a slope gradually inclined upward from the rear end of the straight front groove to the straight rear groove; each second shaft only slides inside the straight rear groove; a step is formed at the joint between the inclined middle groove and the straight rear groove, for preventing the first shaft from passing through the inclined middle groove, and for allowing the first shaft only passing through the straight rear groove through the outer middle groove when the first shaft slides backward from the straight front groove into the straight rear groove; each first shaft is located inside the straight front groove when the first frame and the second frame are closed.

The configuration of the guiding grooves may make the front potions of the jaws closed at the initial stage of the forward movement of the second frame, so that a capsule can be clamped. During a period in which the first shafts start to slide into inclined middle groove, the front portions of the jaws will be open gradually, thus to ensure that the capsule can enter the chamber of the first frame successfully. During a period in which the second frame moves backward to an intermediate state (the intermediate state refers to a state in which the capsule is exposed backward away from the chamber of the first frame under the action of the pushing plate), because the first shafts always slides inside the corresponding straight front grooves and the corresponding outer middle grooves, the front portions of the jaws are always open during this process. Once the capsule is exposed backward away from the chamber, the capsule may fall off from the clamps of the two jaws due to self weight. So far, the capsule rejection is accomplished. When the second frame continues to move backward, the front portions of the jaws are closed gradually until the first shafts passes through the outer middle grooves sliding into the straight rear grooves. At this time, a clamp for holding the capsule are formed again between the jaws, that is, it returns to the initial state, to get ready for clamping the second capsule. The guiding grooves have the advantages of simple and rational configuration, single-direction and stable direction shift. Of course, other guiding grooves configurations may be employed to drive the front portions of the jaws to complete one opening and one closing relatively to the second frame.

As the first shafts will pass through a step during sliding into the straight front grooves from the inclined middle grooves and the first shafts will be at the varying height during the sliding, to ensure the first shifts to slide smoothly inside the guiding grooves, each first shaft consists of an upper shaft and a lower shaft in the same longitudinal axis, the upper shaft protrudes upwardly at the front of the jaw, an assembly hole is provided opening downward at the bottom surface of the front of the jaw, the lower shaft is located at the assembly hole and capable of moving upward and downward, a supporting spring is provided inside the assembly hole to keep the lower shaft have a tendency of extending downward and being exposed outside the assembly hole, and the lower shaft is located at the corresponding guiding groove. When the first shafts are at the different height, the lower shafts will automatically adjust the height under the action of the supporting springs, in order to ensure the smooth sliding of the first shafts.

Preferably, the pushing plate further has a back surface, two elastic pieces in criss-crossing shape are positioned on the back surface of the pushing plate, each elastic piece has two ends, each end of the elastic pieces is bended backward. As the capsule is a paper pod accommodating tightly compressed coffee powder, the capsule will be wetted after the extraction is finished, and is likely to adhere to the front end face of the pushing plate to be difficult to fall off. Therefore, by providing the elastic pieces on the outer end face of the pushing plate, the capsule will be not adhered to the pushing plate under the elasticity of the elastic pieces, and thus successful pod dropping is ensured.

An annular recess is formed on the front surface of the pushing plate, the apertures communicate with the outlet through the annular recess. In this way, it is ensured that the extracted liquid may flow out through the outlet even though the pushing plate touches with the inner wall of the chamber. A filter net is fixed on the back surface of the pushing plate, the elastic pieces are positioned on the back of the filter net. The filter net is able to filter off impurities to improve the quality of the discharged liquid.

The front end of each pushing plate is positioned with the end of the backward pushing rod outside of the front side wall of the first frame via a connecting board, the first end of the connecting board is connected to the front end of pushing plate to form an integrated piece, the second end of the connecting board is positioned with the end of the backward pushing rod via a screw.

The front portion of each jaw has a slot which is running through vertically for receiving the circular edge of the capsule, the front portion of each jaw has an arc end surface for holding the partial body of the capsule, the two slots of two jaws face to face together form a clamp for holding the capsule. The slots have a function of stopping the circular edge from moving forward and backward. In addition, the front portion of each jaw has an arc end surface for holding the partial body of the capsule. Therefore, the clamps formed by the front portions of the above jaws may reliably position a capsule between the two clamps.

The second frame has a left and right side wall, four protrusions, each two protrusions are attached to one of the left and right side wall of the second frame, two protrusions at the same side are arranged at intervals and located on the same horizontal line, and an inserting hole with an inner wall is formed on each jaw for two protrusions to pass through; for the two protrusions at the same side, the former protrusion touches the foremost end of the inserting hole, while the latter protrusion touches the rearmost end of the inserting hole. By the restriction of the two protrusions at the same side to the corresponding jaw, the jaw may be better prevented from shaking up and down relative to the second frame.

The elastic element is composed of two tension springs, the front end of each tension springs is hooked on the corresponding pushing plates at the same side, while the rear end thereof is hooked on the corresponding side of the housing. The elastic element has the advantage of easy installation.

The elastic element is a tower spring, the tower spring is located at the chamber of the first frame and supported between the front side wall of the first frame and the front side surface of the pushing plate. The elastic element may be two springs sleeved on the backward pushing rods.

The elastic element mainly have two functions: clamping the capsule when the capsule enters the chamber and pushing the capsule to reject from the chamber after the brewing is finished.

Compared with the prior art, in the present invention, a capsule is clamped by the clamps formed by the front portions of the two jaws first, the second frame moves forward until the capsule attaches to the back surface of the pushing plate and then continues to move forward to enable the front portions of the jaws to open, and the second frame gradually drives the capsule to enter the chamber; meanwhile, the second frame will drive the pushing plate, the backward pushing rods and the guiding plates to move forward against the elastic force of the elastic element until the first frame and the second frame are closed. So far, the delivery of the capsule is accomplished and the extraction of beverage will be started. After extraction, the second frame moves backward, the pushing plate, the backward pushing rods and the guiding plates will drive the capsule to move backward against the elastic force of the elastic element; when the second frame moves backward to the intermediate state, the pushing plate will drive the capsule to reject from the chamber; at this time, each first shaft is located at the corresponding outer middle groove, the front portions of the jaws are opened, and the capsule drops due to its weight, So far, the rejection of the capsule is accomplished. The second frame continues to move backward until to be completely open, the first shafts passes through the outer middle grooves sliding into the straight rear grooves, the jaws are closed to the initial state to wait for a next loading. The whole coffee capsule rejection process is simple, and all components in the device have simple configuration and can be assembled conveniently.

### Brief Description of the Drawings

Fig. 1 is a perspective view of a capsules rejection mechanism in accordance with an embodiment of the present invention (when the second frame is completely open);
Fig. 2 is a perspective view of the mechanism without the upper casing and the elastic element in accordance with the embodiment of the present invention (when the capsule is installed);
Fig. 3 is a sectional view of the mechanism without the upper casing and the elastic element in accordance with the embodiment of the present invention (when the capsule is installed);
Fig. 4 is a perspective view of the mechanism without the upper casing and the elastic element in accordance with the embodiment of the present invention (when the capsule is installed, and the second frame moves forward to make the capsule attach to the pushing plate);
Fig. 5 is a sectional view of the mechanism without the upper casing and the elastic element in accordance with the embodiment of the present invention (when the capsule is installed, and the second frame moves forward to make the capsule attach to the pushing plate);
Fig. 6 is a perspective view of the mechanism in accordance with the embodiment of the present invention (at the status of extraction and the first frame and the second frame being closed);
Fig. 7 is a perspective view of the mechanism without the upper casing and the elastic element in accordance with the embodiment of the present invention (at the status of extraction and the first frame and the second frame being closed);
Fig. 8 is a sectional view of the mechanism without the upper casing and the elastic element in accordance with the embodiment of the present invention (at the status of extraction and the first frame and the second frame being closed);
Fig. 9 is a perspective view of the mechanism without the upper casing and the elastic element in accordance with the embodiment of the present invention(at the status of the rejection of the capsule);
Fig. 10 is a sectional view of the mechanism without the upper casing and the elastic element in accordance with the embodiment of the present invention(at the status of the rejection of the capsule);
Fig. 11 is a perspective view of a jaw of a mechanism in accordance with the embodiment of the present invention;
Fig. 12 is a sectional view of the jaw of the mechanism in accordance with the embodiment of the present invention;
Fig. 13 is a perspective view of the pushing plate of the mechanism in accordance with the embodiment of the present invention;
Fig. 14 is a perspective view of the guiding plate of the mechanism in accordance with the embodiment of the present invention;
Fig. 15 is a sectional view of the second frame in accordance with the embodiment of the present invention;
Fig. 16 is a perspective view of the lower casing of the mechanism in accordance with the embodiment of the present invention;
Fig. 17 is a perspective view of the first frame, the pushing plate, the backward pushing rods and the guiding plates in accordance with the embodiment of the present invention when using tower spring as elastic element.

### Detailed description of the preferred embodiment

To enable a further understanding of the innovative and technological content of the invention herein, refer to the detailed description of the invention and the accompanying drawings below.

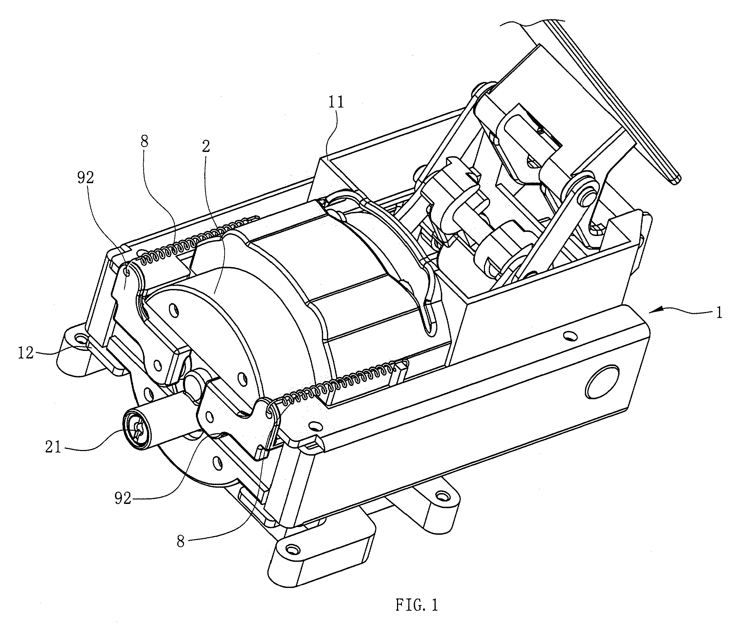

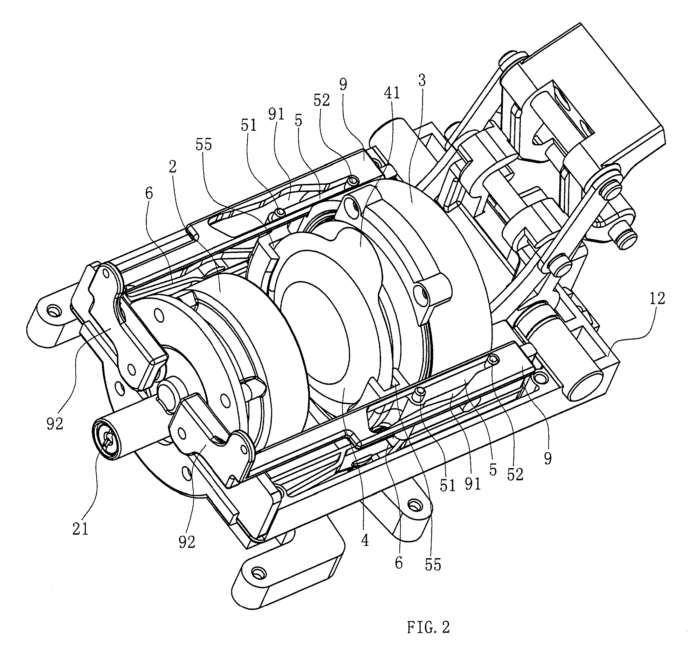

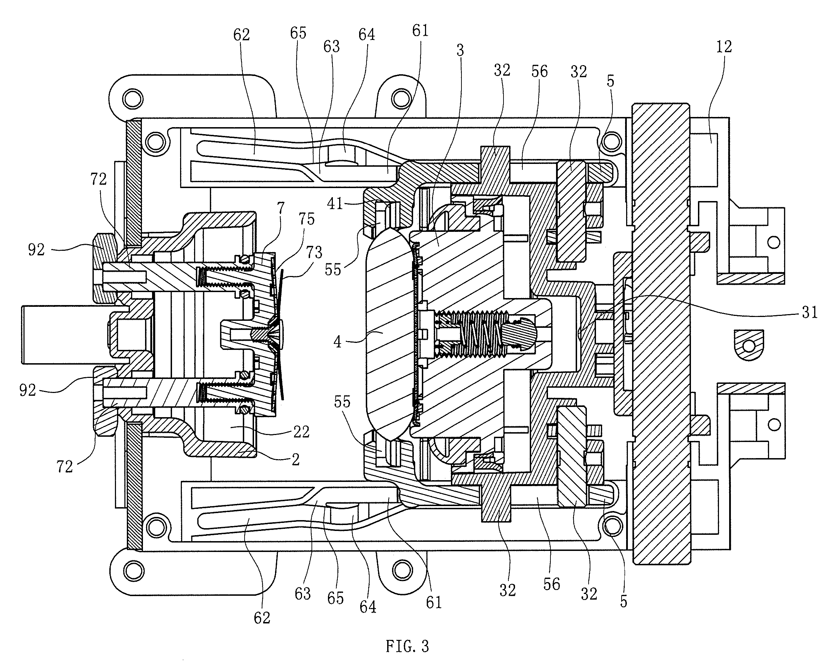

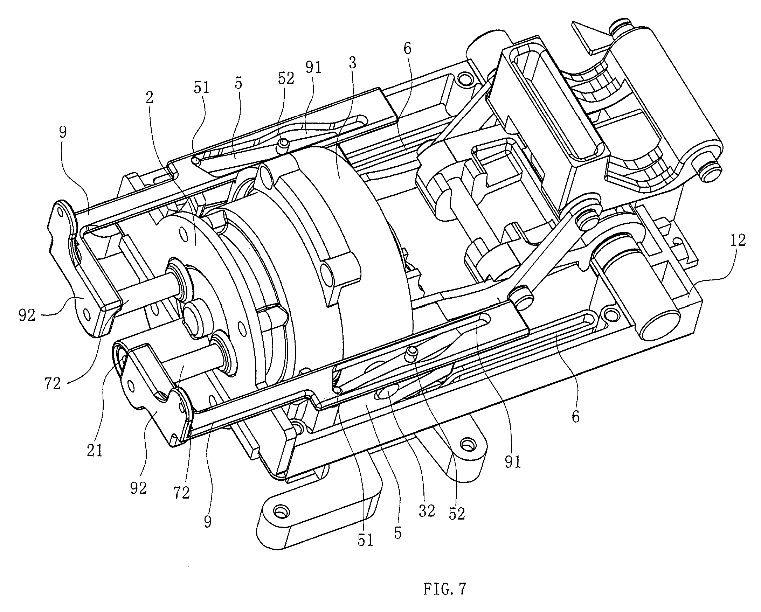

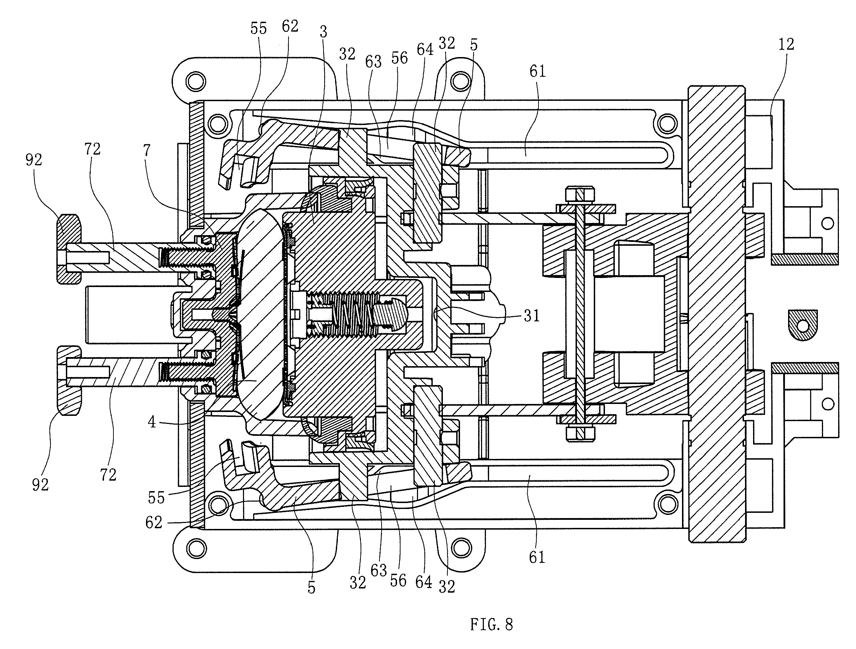

As shown in the figures from Fig. 1 to Fig. 17, a preferred embodiment of the present invention is shown.

The capsules rejection mechanism in a beverage extraction device comprises a housing 1. The housing 1 is composed of an upper casing 11 with a left side and a right side and a lower casing 12 with a left side and a right side, jointing up and down. The lower casing 12 has a falling passage 121 for the rejected capsule to pass through.

A first frame 2 is positioned inside the front portion of the housing 1, and has a front side wall, an outlet 21, and a chamber 22 for holding a capsule 4 with a circular edge 41. In this embodiment, the capsule 4 is a paper pod accommodating tightly compressed coffee powder.

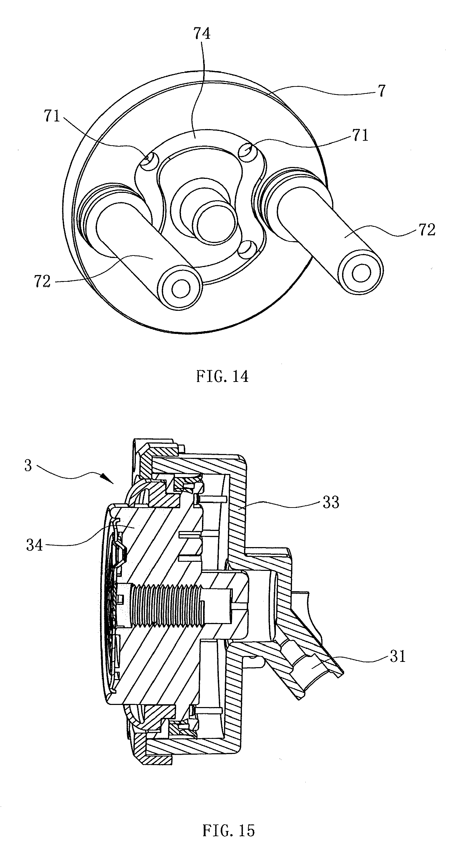

As shown in Fig. 15, a second frame 3 having an inlet 31, a left side and a right side, is disposed inside the back portion of the housing 1 and is movable forward and backward relative to the first frame 2. The second frame 3 consists of a shell 33 and a piston body 34 disposed inside the shell. The piston body 34 and the inner wall of the shell 33 form the liquid sealing fit via a seal ring. The first frame 2 and the second frame 3 are able to form a relatively enclosed extraction chamber after closed, that is, the piston body 34 extends into the chamber 22 to form an extraction chamber. When in extraction, the piston body is driven to move forward by the hydraulic pressure, so that a certain pressure is formed between the piston body and the capsule to ensure air-tightness. This is a common design for the second frame 3. Of course, the second frame 3 may be a simple plate member, such as the configuration of the second frame 3 of the patent mentioned in the Description of the Prior Art.

A complete beverage extraction device includes a driving mechanism for driving the second frame 3 to move. The driving mechanism may be a connecting rod mechanism driven by a handle, referring to the Chinese Patent CN201044719Y (Patent No. ZL200720110811.2), titled Automatic Rejection Mechanism of Coffee Capsules in Coffeemaker.

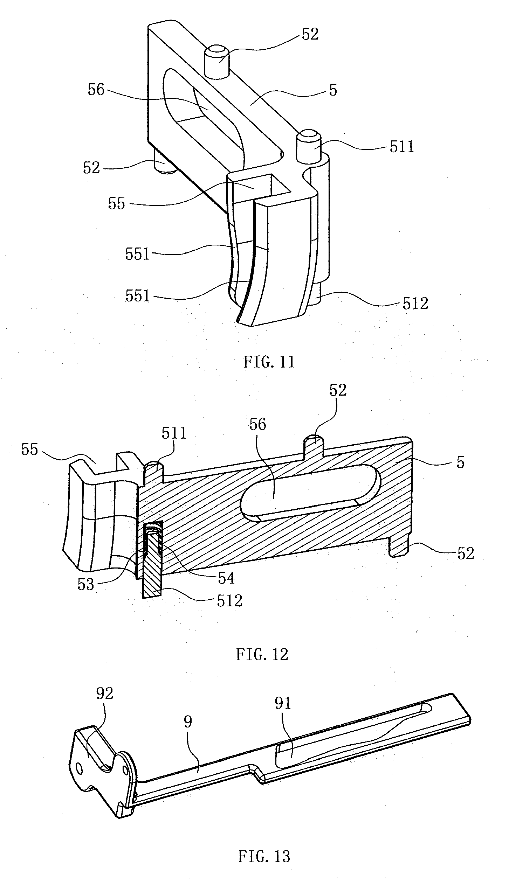

As shown Fig. 11 and Fig. 12, two jaws 5, each is located at one of left and right sides of the second frame 3, and the two jaws is movable forward and backward together with the second frame 3. The second frame 3 has a left and right side wall, four protrusions 32, each two protrusions 32 are attached to one of the left and right side wall of the second frame 3, two protrusions 32 at the same side are arranged at intervals and located on a same horizontal line, and an inserting hole 56 with an inner wall is formed on each jaw 5 for two protrusions 32 to pass through, for the two protrusions 32 at the same side, the former protrusion 32 touches the foremost end of the inserting hole 56, while the latter protrusion 32 touches the rearmost end of the inserting hole 56.

The front portion of each jaw 5 extends to the front of the second frame 3 to together form a clamp for holding the capsule 4, the front portion of each jaw 5 has a slot 55 which is running through vertically for receiving the circular edge 41 of the capsule 4, the front portion of each jaw 5 has an arc end surface 551 for holding the partial body of the capsule 4, the two slots 55 of two jaws 5 face to face together form a clamp for holding the capsule 4.

Each jaw 5 has a first shaft 51 and a second shaft 52, the first shaft 51 and the second shaft 52 respectively protruding vertically at the front and the rear of each jaw 5, and the housing 1 further having two guiding grooves 6 respectively at one side of the second frame 3 for guiding the first shaft 51 and the second shaft 52 of each jaw 5 when the first shaft 51 and the second shaft 52 sliding inside the corresponding guiding groove 6. Each first shaft 51 consists of an upper shaft 511 and a lower shaft 512 in the same longitudinal axis, the upper shaft 511 protrudes upwardly at the front of the jaw 5, an assembly hole 53 is provided opening downward at the bottom surface of the front of the jaw 5, the lower shaft 512 is located at the assembly hole 53 capable of moving upward and downward, a supporting spring 54 is provided inside the assembly hole 53 to keep the lower shaft 512 have a tendency of extending downward and being exposed outside the assembly hole 53, and the lower shaft 512 is located at the corresponding guiding groove 6. When the first shaft 51 slides along the guiding groove 6, the first shaft 51 drives the front portion of each jaw 5 to complete one opening and one closing relative to the second frame 3 during the second frame 3 completing one whole forward and backward movement. Two guiding grooves 6 are respectively disposed at one of the left and right sides of the lower casing 12.

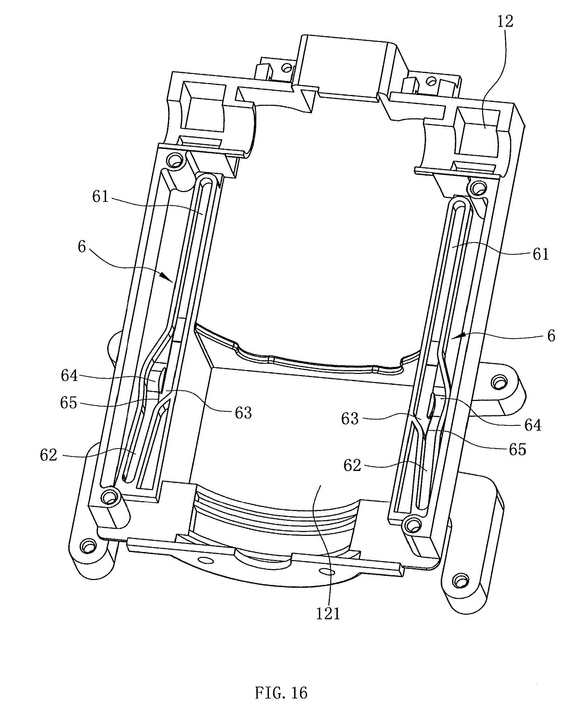

As show in Fig. 16, in this embodiment, each guiding groove 6 consists of a straight rear groove 61 having a front end, a straight front groove 62 having a rear end, an inclined middle groove 63 and an outer middle groove 64; the rear end of each straight front groove 62 communicates to two passages, one passage communicates the front end of the straight rear groove 61 passing through the inclined middle groove 63, for the first shaft 51 to slide from the straight rear groove 61 into the straight front groove 62 passing through the inclined middle groove 63, the front end of the straight front groove 62 slightly slants outwardly relative to the straight rear groove 61, another passage communicates the front end of the straight rear groove 61 passing through the outer middle groove 64, for the first shaft 51 to slide from the straight front groove 62 into the straight rear groove 61 passing through the outer middle groove 64; the inclined middle groove 63 slants from the front end of the straight rear groove 61 outwardly to the straight front groove 62, the outer middle groove 64 is located outer of straight rear groove 61 and the inclined middle groove 63, the bottom surface of the outer middle groove 64 is a slope gradually inclined upward from the rear end of the straight front groove 62 to the straight rear groove 61; each second shaft 52 only slides inside the straight rear groove 61; a step 65 is formed at the joint between the inclined middle groove 63 and the straight rear groove 61, the bottom surface of the inclined middle groove 63 is higher than that of the straight rear groove 61, for preventing the first shaft 51 from passing through the inclined middle groove 63, and for allowing the first shaft 51 only passing through the outer middle groove 64, when the first shaft 51 slides backward from the straight front groove 62 into the straight rear groove 61; each first shaft 51 is located inside the straight front groove 62 when the first frame 2 and the second frame 3 are closed.

As shown in Fig. 13 and Fig. 14, a pushing plate 7 having a front surface is disposed inside the chamber 22 and is movable forward and backward. An annular recess 74 is formed on the front surface of the pushing plate 7. A plurality of apertures 71 are provided on the pushing plate 7 running through along the axis of the housing 1 and communicating with the outlet 21 for liquid to pass through. The apertures 71 communicate the outlet 21 through the annular recess 74. Two backward pushing rods 72 are provided on the front surface of the pushing plate 7, each backward pushing rod 72 movably passes through the front side wall of the first frame 2. The pushing plate 7 further has a back surface, two elastic pieces 73 in criss-crossing shape are positioned on the back surface of the pushing plate 7, each elastic piece 73 has two ends, each end of the elastic pieces 73 is bended backward. A filter net 75 is positioned on the back surface of the pushing plate 7, the elastic pieces 73 are positioned on the back of the filter net 75.

An elastic element 8, enables the pushing plate 7 to have a tendency to move backward away from the chamber 22.

As shown in the figures from Fig. 1 to Fig. 16, the elastic element 8 is composed of two tension springs, the front end of each tension spring is hooked on the corresponding pushing plate 9 at the same side, while the rear end thereof is hooked on upper casing 11 of the housing 1.

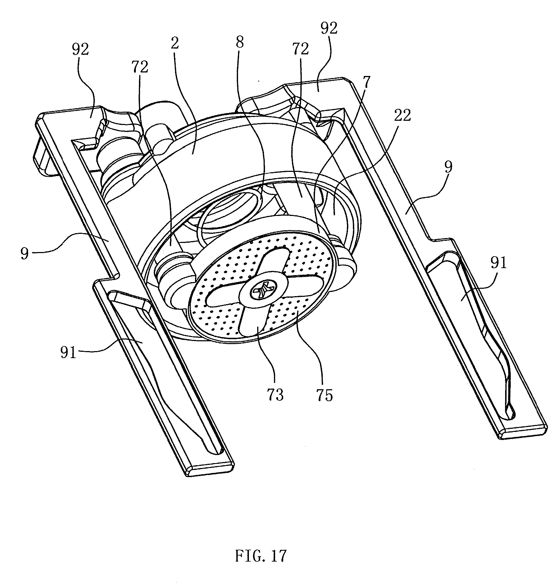

As shown in Fig. 17, the elastic element 8 is a tower spring, the tower spring is located at the chamber 22 of the first frame and supported between the front side wall of the first frame 2 and the front side surface of the pushing plate 7.

Two guiding plates 9 are respectively located at one of left and right sides of the second frame 3, the front end of each guiding plate 9 is positioned with the end of the backward pushing rod 72 outside of the front side wall of the first frame 2. The front end of each pushing plate 9 is positioned with the end of the backward pushing rod 72 outside of the rear wall of the chamber 22 via a connecting board 92, the connecting board 92 has a first end and a second end, the first end of the connecting board 92 is connected to the front end of pushing plate 9 to form an integrated piece, the second end of the connecting board 92 is positioned with the end of backward pushing rod 72 via screws. A trip hole 91 is provided on each guiding plate 9 arranged along the axis of the housing 1, the first shaft 51 and the second shaft 52 of each jaw pass through each trip hole 91 slideable inside each trip hole 91, each first shaft 51 touches the foremost end of each trip hole 91 when the second frame 3 moves forward to make the capsule 4 attach to the pushing plate 7.

The operating principles and processes of the capsules rejection mechanism in a beverage extraction device are as follows.

As shown in the figures from Fig. 1 to Fig. 3, during the preparation of coffee, the circular edge 41 of a capsule is inserted in the slots 55 of the two jaws and the partial body of the capsule 4 is held in the arc end surface 551 of the front portion of each jaw 5, so that the capsule 4 may be positioned at the front of second frame 3 stably.

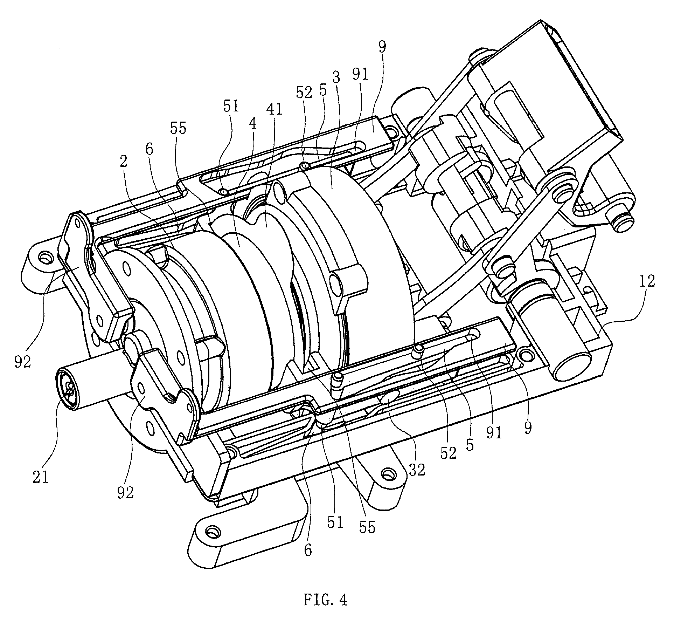

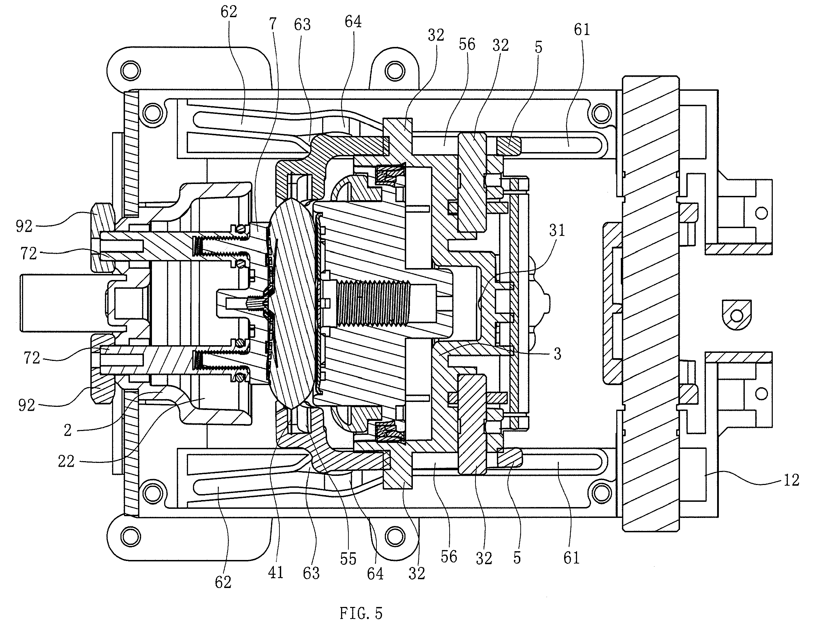

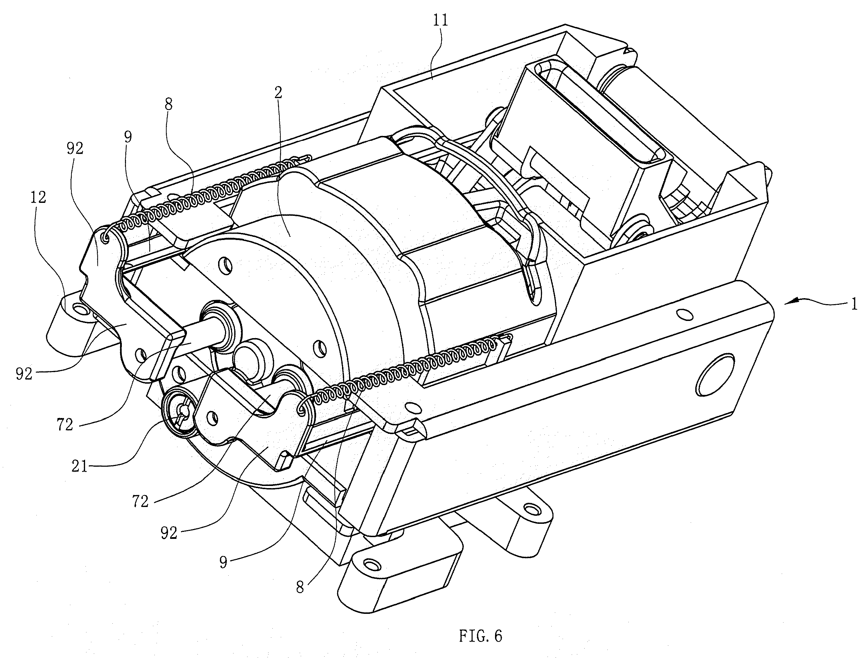

As shown in Fig. 4 and Fig. 5, the second frame 3 moves forward until the capsule 4 attaches to the back surface of the pushing plate 7, each first shaft 51 is located at a joint between the inclined middle groove 63 and the straight front groove 62, and meanwhile the first shaft 51 touches the foremost end of each trip hole 91 of each guiding plate 9. The second frame 3 continues to move forward, the first shaft 51 drives the front portion of each jaw 5 to open, the second frame 3 gradually drives the capsule 4 to enter the chamber 22. The second frame 3 will drive the guiding plates 9, the pushing plate 7 and the backward pushing rods 72 to move forward against the elastic force of the elastic element 8, as shown in figures from Fig. 6 to Fig. 8, until the first frame 2 and the second frame 3 are closed. So far, the delivery of the capsule is accomplished. Next, the extraction of beverage will be started. The extraction process is similar to that of the patent mentioned in Description of the Prior Art.

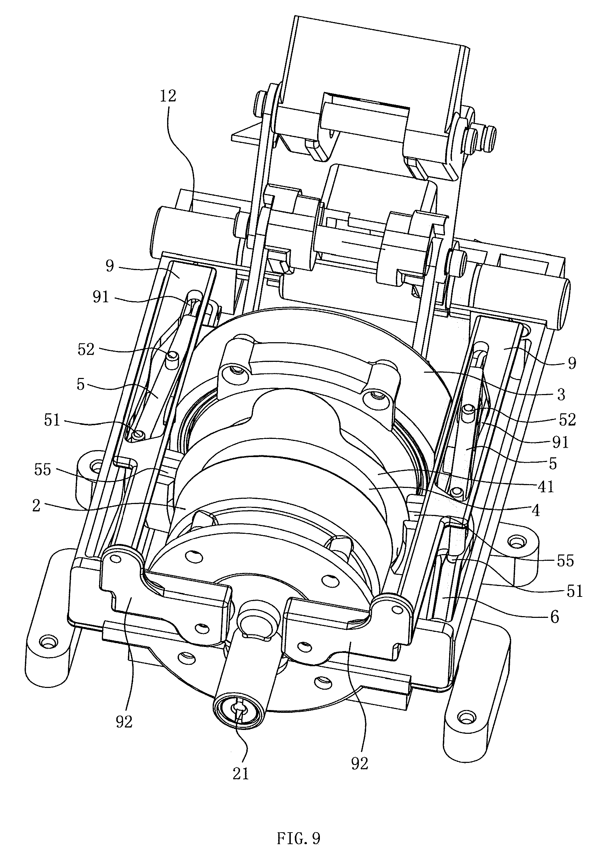

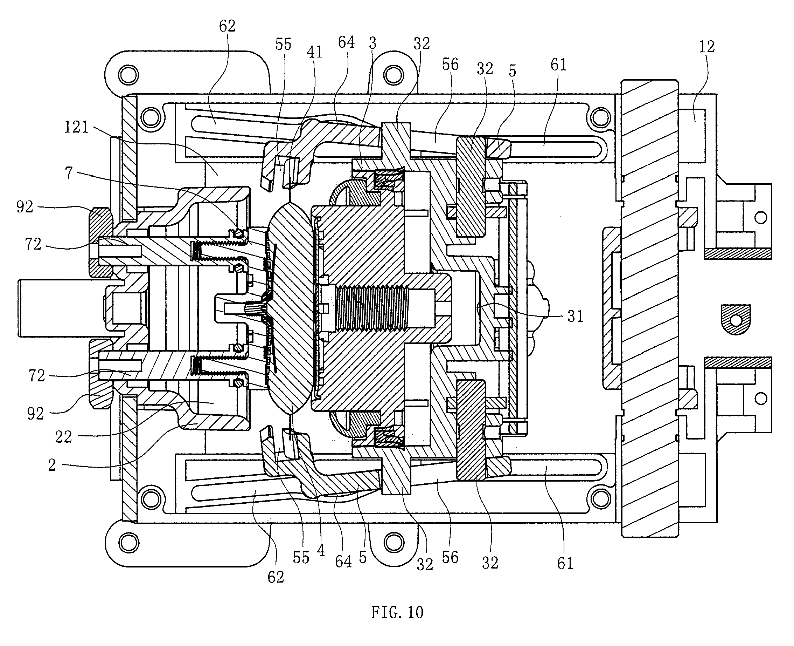

As shown in Fig. 9 and Fig. 10, after the extraction, the second frame 3 moves backward and the pushing plate 7, the backward pushing rods 72 and the guiding plates 9 gradually restore to the initial state under the elastic force of the elastic element 8. The pushing plate 7 will drive the capsule 4 to move backward. Under the stop of the step, each first shaft 51 only passes through the outer middle groove 64 when the first shaft 51 slides backward into the straight rear groove 61, so the pushing plate 7 will push the capsule 4 out from the chamber 22 when the second frame 3 moves backward to an intermediate position, and the first shaft 51 is located inside the outer middle grooves 64. The front portions of the clamping plates 5 are open, so that the capsule 4 falls into a mouth 121 due to its weight. So far, the rejection of the capsule is accomplished.

The second frame 3 continues to move backward until to be completely open. The first shafts 51 pass through the outer middle grooves 64 and slide into the straight rear groove 61, and the jaws 5 are forced to be closed to the initial state to wait for a next loading.

## Claims

1. A capsule rejection mechanism in a beverage extraction device, comprising a housing (1) having a front portion and a back portion;
a first frame (2) positioned inside a front portion of the housing (1), having a front side wall, an outlet (21), and a chamber (22) for holding a capsule (4) with a circular edge (41);
a second frame (3) having an inlet (31), a left side and a right side, disposed inside a back portion of the housing (1) and being movable forward and backward relative to the first frame (2);
two jaws (5), each located at one of left and right sides of the second frame (3), and the two jaws (5) being movable forward and backward together with the second frame (3), each jaw (5) having a front portion, a first shaft (51) and a second shaft (52), the front portion of each jaw (5) extending to the front of the second frame (3) to together form a clamp for holding the capsule (4), the first shaft (51) and the second shaft (52) respectively protruding vertically at the front and the rear of each jaw (5); and the housing (1) further having two guiding grooves (6) respectively at one side of the second frame (3) for guiding the first shaft (51) and the second shaft (52) of each jaw (5) when the first shaft (51) and the second shaft (52) sliding inside the corresponding guiding groove (6); when the first shaft (51) sliding along the guiding groove (6), the second frame (3) driving the front portions of the jaws (5) to complete one opening and one closing relative to the second frame (3) during the second frame (3) completing one whole forward and backward movement; **characterized in that** the capsule rejection mechanism further comprises
a pushing plate (7) having a front surface disposed inside the chamber (22) and being movable forward and backward, a plurality of apertures (71) are provided on the pushing plate (7) running through along the axis of the housing (1) and communicating with the outlet (21) for liquid to pass through, two backward pushing rods (72) are provided on the front surface of the pushing plate (7), each backward pushing rod (72) movably passes through the front side wall of the first frame (2);
an elastic element (8), enabling the pushing plate (7) to have a tendency to move backward away from the chamber (22);
two guiding plates (9) respectively located at one of left and right sides of the second frame (3), the front end of each guiding plate (9) is positioned with the end of the backward pushing rod (72) outside of the rear wall of the chamber (22), a trip hole (91) is provided on each guiding plate (9) arranged along the axis of the housing (1), the first shaft (51) and the second shaft (52) of each jaw (5) pass through each trip hole (91) slideable inside each trip hole (91), each first shaft (51) touches the foremost end of each trip hole (91) when the second frame (3) moves forward to make the capsule (4) attach to the pushing plate (7).

2. The capsule rejection mechanism in a beverage extraction device as claimed in claim 1, **characterized in that** each guiding groove (6) consists of a straight rear groove (61) having a front end, a straight front groove (62) having a rear end, an inclined middle groove (63) and an outer middle groove (64); a rear end of each straight front groove (62) communicates to two passages, one passage communicates with a front end of the straight rear groove (61) passing through the inclined middle groove (63), for the first shaft (51) to slide from the straight rear groove (61) into the straight front groove (62) passing through the inclined middle groove (63), another passage communicates with the front end of the straight rear groove (61) passing through the outer middle groove (64), for the first shaft (51) to slide from the straight front groove (62) into the straight rear groove (61) passing through the outer middle groove (64); the inclined groove (63) slants from the front end of the straight rear groove (61) outwardly to the straight front groove (62), the outer middle groove (64) is located outer of the straight rear groove (61) and the inclined middle groove (63), the bottom surface of the outer middle groove (64) is a slope gradually inclined upward from the rear end of the straight front groove (62) to the straight rear groove (61); each second shaft (52) only slides inside the straight rear groove (61); a step (65) is formed at the joint between the inclined middle groove (63) and the straight rear groove (61), for preventing the first shaft (51) from passing through the inclined middle groove (63), and for allowing the first shaft (51) only passing through the straight rear groove (61) through the outer middle groove (64) when the first shaft (51) slides backward from the straight front groove (62) into the straight rear groove (61); each first shaft (51) is located inside the straight front groove (62) when the first frame (2) and the second frame (3) are closed.

3. The capsule rejection mechanism in a beverage extraction device as claimed in claim 2, **characterized in that** each first shaft (51) consists of an upper shaft (511) and a lower shaft (512) in the same longitudinal axis, the upper shaft (511) protrudes upwardly at the front of the jaw (5), an assembly hole (53) is provided opening downward at the bottom surface of the front of the jaw (5), the lower shaft (512) is located at the assembly hole (53) and capable of moving upward and downward, a supporting spring (54) is provided inside the assembly hole (53) to keep the lower shaft (512) have a tendency of extending downward and being exposed outside the assembly hole (53), and the lower shaft (512) is located at the corresponding guiding groove (6).

4. The capsule rejection mechanism in a beverage extraction device as claimed in claim 1, **characterized in that** the pushing plate (7) further has a back surface, two elastic pieces (73) in criss-crossing shape are positioned on the back surface of the pushing plate (7), each elastic piece (73) has two ends, each end of the elastic pieces (73) is bended backward.

5. The capsule rejection mechanism in a beverage extraction device as claimed in claim 4, **characterized in that** an annular recess (74) is formed on the front surface of the pushing plate (7), the apertures (71) communicate with the outlet (21) through the annular recess (74), a filter net (75) is fixed on the back surface of the pushing plate (7), the elastic pieces (73) are positioned on the back of the filter net (75).

6. The capsule rejection mechanism in a beverage extraction device as claimed in claim 1, **characterized in that** the front end of each pushing plate (9) is positioned with the end of the backward pushing rod (72) outside of the front side wall of the first frame (2) via a connecting board (92), the first end of the connecting board (92) is connected to the front end of pushing plate (9) to form an integrated piece, the second end of the connecting board (92) is positioned with the end of the backward pushing rod (72) via a screw.

7. The capsule rejection mechanism in a beverage extraction device as claimed in claim 1, **characterized in that** the front portion of each jaw (5) has a slot (55) which is running through vertically for receiving the circular edge (41) of the capsule, the front portion of each jaw (5) has an arc end surface (551) for holding the partial body of the capsule (4), the two slots (55) of two jaws (5) face to face together form a clamp for holding the capsule (4).

8. The capsule rejection mechanism in a beverage extraction device as claimed in claim 1, **characterized in that** the second frame (3) has a left and right side wall, four protrusions (32), each two protrusions (32) are attached to one of the left and right side wall of the second frame (3), two protrusions (32) at the same side are arranged at intervals and located on the same horizontal line, and an inserting hole (56) with an inner wall is formed on each jaw (5) for two protrusions (32) to pass through; for the two protrusions (32) at the same side, the former protrusion (32) touches the foremost end of the inserting hole (56), while the latter protrusion (32) touches the rearmost end of the inserting hole (56).

9. The capsules rejection mechanism in a beverage extraction device as claimed in any one of claim 1 to claim 8, **characterized in that** the elastic element (8) is composed of two tension springs, the front end of each tension springs is hooked on the corresponding pushing plates (9) at the same side, while the rear end thereof is hooked on the corresponding side of the housing (1).

10. The capsule rejection mechanism in a beverage extraction device as claimed in any one of claim 1 to claim 8, **characterized in that** the elastic element (8) is a tower spring, the tower spring is located at the chamber (22) of the first frame and supported between the front side wall of the first frame (2) and the front side surface of the pushing plate (7).

## Patentansprüche

1. Kapselabwurfmechanismus in einer Getränkeextraktionsvorrichtung, umfassend ein Gehäuse (1), das einen vorderen Bereich und einen hinteren Bereich aufweist;
einen innerhalb eines vorderen Bereichs des Gehäuses (1) angeordneten ersten Rahmen (2), der eine vordere Seitenwand, einen Auslass (21) und eine Kammer (22) zum Halten einer Kapsel (4) mit einem kreisförmigen Rand (41) aufweist;
einen zweiten Rahmen (3), der einen Einlass (31), eine linke Seite und eine rechte Seite aufweist, der in einem hinteren Bereich des Gehäuses (1) angeordnet und nach vorne und hinten relativ zu dem ersten Rahmen (2) beweglich ist;
zwei Backen (5), wobei jede an einer der linken und rechten Seiten des zweiten Rahmens (3) angeordnet ist, und wobei die zwei Backen (5) gemeinsam mit dem zweiten Rahmen (3) nach vorne und hinten beweglich sind, wobei jede Backe (5) einen vorderen Bereich, einen ersten Schaft (51) und einen zweiten Schaft (52) aufweist, wobei der vordere Bereich jeder Backe (5) sich bis zur Vorderseite des zweiten Rahmens (3) erstreckt und gemeinsam eine Klammer zum Halten der Kapsel (4) bildet, wobei der erste Schaft (51) und der zweite Schaft (52) jeweils an der Vorderseite und der Rückseite jeder Backe (5) vertikal vorstehen; und wobei das Gehäuse (1) weiter jeweils an einer Seite des zweiten Rahmens (3) zwei Führungsnuten (6) zum Führen des ersten Schafts (51) und des zweiten Schafts (52) jeder Backe (5) aufweist, während der erste Schaft (51) und der zweite Schaft (52) in der zugeordneten Führungsnut (6) gleiten; wobei während der erste Schaft (51) entlang der Führungsnut (6) gleitet, der zweite Rahmen (3) die vorderen Bereiche der Backen (5) antreibt, um eine Öffnungsbewegung und eine Schließbewegung relativ zu dem zweiten Rahmen (3) zu vervollständigen, während der zweite Rahmen (3) eine vollständige Vorwärts- und Rückwärtsbewegung durchführt; **dadurch gekennzeichnet, dass** der Kapselabwurfmechanismus weiter umfasst
eine Druckplatte (7), die eine vordere Oberfläche aufweist, die in der Kammer (22) angeordnet und nach vorne und hinten bewegbar ist, wobei eine Vielzahl von Öffnungen (71) an der Druckplatte (7) vorgesehen sind, welche entlang der Achse des Gehäuses (1) verlaufen und mit dem Auslass (21) in Verbindung stehen, um Flüssigkeit hindurchzulassen, wobei zwei nach hinten drückende Stäbe (72) auf der vorderen Oberfläche der Druckplatte (7) vorgesehen sind, wobei jeder nach hinten drückende Stab (72) beweglich die vordere Seitenwand des ersten Rahmens (2) durchsetzt;
ein elastisches Element (8), das es erlaubt, dass die Druckplatte (7) dazu neigt, sich nach hinten weg von der Kammer (22) zu bewegen;
zwei jeweils auf einer von linker und rechter Seite des zweiten Rahmens (3) angeordnete Führungsplatten (9), wobei das vordere Ende jeder Führungsplatte (9) mit dem Ende des nach hinten drückenden Stabes (72) außerhalb der hinteren Wand der Kammer (22) angeordnet ist, wobei ein Langloch (91) an jeder Führungsplatte (9) entlang der Achse des Gehäuses (1) angeordnet ist, wobei der erste Schaft (51) und der zweite Schaft (52) jeder Backe (5) durch jedes Langloch (91) innerhalb jedes Langloches (91) gleitend verläuft, wobei jeder erste Schaft (51) das vorderste Ende jedes Langloches (91) berührt, wenn der zweite Rahmen (3) nach vorne bewegt wird, um die Kapsel (4) an der Druckplatte (7) anzubringen.

2. Kapselabwurfmechanismus in einer Getränkeextraktionsvorrichtung nach Anspruch 1, **dadurch gekennzeichnet, dass** jede Führungsnut (6) aus einer geraden hinteren Nut (61) mit einem vorderen Ende, einer geraden vorderen Nut (62) mit einem hinteren Ende, einer geneigten mittleren Nut (63) und einer äußeren mittleren Nut (64) besteht; wobei ein hinteres Ende jeder geraden vorderen Nut (62) mit zwei Durchgängen in Verbindung steht, wobei ein Durchgang mit einem vorderen Ende der geraden hinteren Nut (61) in Verbindung steht und durch die geneigte mittlere Nut (63) verläuft, sodass der erste Schaft (51) von der ersten geraden hinteren Nut (61) durch die geneigte mittlere Nut (63) wandernd in die gerade vordere Nut (62) gleitet, wobei ein anderer Durchgang durch die äußere mittlere Nut (64) verlaufend mit dem vorderen Ende der geraden hinteren Nut (61) in Verbindung steht, sodass der erste Schaft (51) von der ersten vorderen Nut (62) durch die äußere mittlere Nut (64) wandernd in die gerade hintere Nut (61) gleitet, wobei die geneigte Nut (63) von dem vorderen Ende der geraden hinteren Nut (61) nach außen zu der geraden vorderen Nut (62) abzweigt, wobei die äußere mittlere Nut (64) außerhalb der geraden hinteren Nut (61) und der geneigten mittleren Nut (63) angeordnet ist, wobei die untere Oberfläche der äußeren mittleren Nut (64) eine Flanke darstellt, die zunehmend von dem hinteren Ende der geraden vorderen Nut (62) hin zur geraden hinteren Nut (61) nach oben geneigt ist; wobei jeder zweite Schaft (52) nur innerhalb der geraden hinteren Nut (61) gleitet; wobei eine Stufe (65) an der Verbindungsstelle zwischen der geneigten mittleren Nut (63) und der geraden hinteren Nut (61) gebildet wird, sodass verhindert wird, dass der erste Schaft (51) durch die geneigte mittlere Nut (63) wandert, und um es zu ermöglichen, dass der erste Schaft (51) nur durch die gerade hintere Nut (61) und durch die äußere mittlere Nut (64) wandert, wenn der erste Schaft (51) nach hinten von der geraden vorderen Nut (62) zu der geraden hinteren Nut (61) gleitet; wobei jeder erste Schaft (51) innerhalb der geraden vorderen Nut (62) angeordnet ist, wenn der erste Rahmen (2) und der zweite Rahmen (3) geschlossen sind.

3. Kapselabwurfmechanismus in einer Getränkeextraktionsvorrichtung nach Anspruch 2, **dadurch gekennzeichnet, dass** jeder erste Schaft (51) aus einem oberen Schaft (511) und einem unteren Schaft (512) in der gleichen Längsachse besteht, wobei der obere Schaft (511) nach oben an der Vorderseite der Backe (5) vorsteht, wobei ein sich nach unten öffnendes Montageloch (53) an der unteren Oberfläche der Vorderseite der Backe (5) vorgesehen ist, wobei der untere Schaft (512) an dem Montageloch (53) angeordnet ist und sich nach oben und unten bewegen kann, wobei eine abstützende Feder (54) innerhalb des Montageloches (53) vorgesehen ist, so dass der untere Schaft (512) dazu neigt, sich nach unten zu erstrecken und dabei außerhalb des Montageloches (53) auszutreten, und wobei der untere Schaft (512) an der zugeordneten Führungsnut (6) angeordnet ist.

4. Kapselabwurfmechanismus in einer Getränkeextraktionsvorrichtung nach Anspruch 1, **dadurch gekennzeichnet, dass** die Druckplatte (7) weiter eine hintere Oberfläche aufweist, wobei zwei elastische Teile (73) in sich durchkreuzender Form auf der hinteren Oberfläche der Druckplatte (7) angeordnet sind, wobei jedes elastische Teil (73) zwei Enden aufweist, wobei jedes Ende der elastischen Teile (73) nach hinten gebogen ist.

5. Kapselabwurfmechanismus in einer Getränkeextraktionsvorrichtung nach Anspruch 4, **dadurch gekennzeichnet, dass** eine ringförmige Vertiefung (74) auf der vorderen Oberfläche der Druckplatte (7) gebildet ist, wobei die Öffnungen (71) mit dem Auslass (21) über die ringförmigen Vertiefung (74) in Verbindung stehen, wobei ein Filternetz (75) auf der Rückseite der Druckplatte (7) befestigt ist, wobei die elastischen Teile (73) auf der Rückseite des Filternetzes (75) angeordnet sind.

6. Kapselabwurfmechanismus in einer Getränkeextraktionsvorrichtung nach Anspruch 1, **dadurch gekennzeichnet, dass** das vordere Ende jeder Druckplatte (9) mit dem Ende des nach hinten drückenden Stabes (72) außerhalb der vorderen Seitenwand des ersten Rahmens (2) über eine Verbindungsplatte (92) angeordnet ist, wobei das erste Ende der Verbindungsplatte (92) mit dem vorderen Ende der Druckplatte (9) verbunden ist zum Bilden eines integrierten Teils, wobei das zweite Ende der Verbindungsplatte (92) mit dem Ende des nach hinten drückenden Stabes (72) über eine Schraube in Position gehalten ist.

7. Kapselabwurfmechanismus in einer Getränkeextraktionsvorrichtung nach Anspruch 1, **dadurch gekennzeichnet, dass** der vordere Bereich jeder Backe (5) einen vertikal verlaufenden Schlitz (55) aufweist, um den kreisförmigen Rand (41) der Kapsel aufzunehmen, wobei der vordere Bereich jeder Backe (5) eine bogenförmige Endoberfläche (551) aufweist, um den Teilkörper der Kapsel (4) zu halten, wobei die beiden Schlitze (55) der beiden Backen (5) einander zugewandt eine Klammer zum Halten der Kapsel (4) bilden.

8. Kapselabwurfmechanismus in einer Getränkeextraktionsvorrichtung nach Anspruch 1, **dadurch gekennzeichnet, dass** der zweite Rahmen (3) eine linke und rechte Seitenwand, vier Vorsprünge (32) aufweist, wobei zwei Vorsprünge (32) an einer der linken und rechten Seitenwand des zweiten Rahmens (3) befestigt sind, wobei zwei Vorsprünge (32) auf der gleichen Seite in Intervallen angeordnet sind und auf derselben horizontalen Linie angeordnet sind, und wobei ein Einführungsloch (56) mit einer inneren Wand an jeder Backe (5) gebildet ist, wobei zwei Vorsprünge (32) dieses durchsetzen; von den zwei Vorsprüngen (32) auf derselben Seite berührt der vordere Vorsprung (32) das vorderste Ende des Einführungsloches (56), während der hintere Vorsprung (32) das hinterste Ende des Einführungsloches (56) berührt.

9. Kapselabwurfmechanismus in einer Getränkeextraktionsvorrichtung nach einem der vorhergehenden Ansprüche 1 bis 8, **dadurch gekennzeichnet, dass** das elastische Element (8) aus zwei Spannungsfedern zusammengesetzt ist, wobei das vordere Ende jeder Spannungsfeder auf derselben Seite der zugehörigen Druckplatten (9) eingehakt ist, während das hintere Ende derselben an die entsprechende Seite des Gehäuses (19) eingehakt ist.

10. Kapselabwurfmechanismus in einer Getränkeextraktionsvorrichtung nach Anspruch 1 bis 8, **dadurch gekennzeichnet, dass** das elastische Element (8) eine Schraubenfeder ist, wobei die Schraubenfeder an der Kammer (22) des ersten Rahmens angeordnet ist und zwischen der vorderen Seitenwand des ersten Rahmens (2) und der vorderen Seitenoberfläche der Druckplatte (7) abgestützt ist.

## Revendications

1. Mécanisme de rejet de capsule dans un dispositif d'extraction de boisson, comprenant un boîtier (1) présentant une partie avant et une partie arrière ;
un premier cadre (2) positionné à l'intérieur d'une partie avant du boîtier (1), présentant une paroi latérale avant, une sortie (21) et une chambre (22) pour retenir une capsule (4) ayant un bord circulaire (41) ;
un deuxième cadre (3) présentant une entrée (31), un côté gauche et un côté droit, disposé à l'intérieur d'une partie arrière du boîtier (1) et pouvant se déplacer vers l'avant et vers l'arrière par rapport au premier cadre (2) ;
deux mâchoires (5), situées chacune au niveau de l'un des côtés gauche et droit du deuxième cadre (3), et les deux mâchoires (5) pouvant se déplacer vers l'avant et vers l'arrière conjointement avec le deuxième cadre (3), chaque mâchoire (5) présentant une partie avant, un premier arbre (51) et un deuxième arbre (52), la partie avant de chaque mâchoire (5) s'étendant vers l'avant du deuxième cadre (3) pour former ensemble une pince pour retenir la capsule (4), le premier arbre (51) et le deuxième arbre (52), respectivement, faisant saillie verticalement à l'avant et à l'arrière de chaque mâchoire (5) ; et le boîtier (1) présentant en outre deux rainures de guidage (6) respectivement au niveau d'un côté du deuxième cadre (3) pour guider le premier arbre (51) et le deuxième arbre (52) de chaque mâchoire (5) lorsque le premier arbre (51) et le deuxième arbre (52) coulissent dans la rainure de guidage (6) correspondante ; lorsque le premier arbre (51) coulisse le long de la rainure de guidage (6), le deuxième cadre (3) entraîne les parties avant des mâchoires (5) pour accomplir une ouverture et une fermeture par rapport au deuxième cadre (3) au moment où le deuxième cadre (3) accomplit un mouvement entier vers l'avant et vers l'arrière ; **caractérisé en ce que** le mécanisme de rejet de capsule comprend en outre
une plaque de poussée (7) présentant une surface avant disposée à l'intérieur de la chambre (22) et pouvant se déplacer vers l'avant et vers l'arrière, une pluralité d'ouvertures (71) sont prévues sur la plaque de poussée (7) traversant le long de l'axe du boîtier (1) et communiquant avec la sortie (21) à travers laquelle passe un liquide, deux tiges de poussée vers l'arrière (72) sont prévues sur la surface avant de la plaque de poussée (7), chaque tige de poussée vers l'arrière (72) passe de manière mobile à travers la paroi latérale avant du premier cadre (2) ;
un élément élastique (8), permettant à la plaque de poussée (7) d'avoir tendance à se déplacer vers l'arrière loin de la chambre (22) ;
deux plaques de guidage (9) situées respectivement au niveau de l'un des côtés gauche et droit du deuxième cadre (3), l'extrémité avant de chaque plaque de guidage (9) est positionnée avec l'extrémité de la tige de poussée vers l'arrière (72) à l'extérieur de la paroi arrière de la chambre (22), un trou de déplacement (91) est prévu sur chaque plaque de guidage (9) agencée le long de l'axe du boîtier (1), le premier arbre (51) et le deuxième arbre (52) de chaque mâchoire (5) passent à travers chaque trou de déplacement (91) en coulissement à l'intérieur de chaque trou de déplacement (91), chaque premier arbre (51) touche l'extrémité la plus en avant de chaque trou de déplacement (91) lorsque le deuxième cadre (3) se déplace vers l'avant pour amener la capsule (4) à se fixer à la plaque de poussée (7).

2. Mécanisme de rejet de capsule dans un dispositif d'extraction de boisson tel que revendiqué dans la revendication 1, **caractérisé en ce que** chaque rainure de guidage (6) est constituée d'une rainure arrière droite (61) présentant une extrémité avant, d'une rainure avant droite (62) présentant une extrémité arrière, d'une rainure médiane inclinée (63) et d'une rainure médiane extérieure (64) ; une extrémité arrière de chaque rainure avant droite (62) communique avec deux passages, un passage communique avec une extrémité avant de la rainure arrière droite (61) en passant à travers la rainure médiane inclinée (63), pour le coulissement du premier arbre (51) depuis la rainure arrière droite (61) vers la rainure avant droite (62) en passant à travers la rainure médiane inclinée (63), un autre passage communique avec l'extrémité avant de la rainure arrière droite (61) en passant à travers la rainure médiane extérieure (64), pour le coulissement du premier arbre (51) depuis la rainure avant droite (62) vers la rainure arrière droite (61) en passant à travers la rainure médiane extérieure (64) ; la rainure inclinée (63) s'incline depuis l'extrémité avant de la rainure arrière droite (61) vers l'extérieur de la rainure avant droite (62), la rainure médiane extérieure (64) est située à l'extérieur de la rainure droite arrière (61) et de la rainure médiane inclinée (63), la surface de fond de la rainure médiane extérieure (64) est une pente inclinée progressivement vers le haut depuis l'extrémité arrière de la rainure avant droite (62) vers la rainure arrière droite (61) ; chaque deuxième arbre (52) coulisse seulement à l'intérieur de la rainure arrière droite (61) ; un palier (65) est formé au niveau de la jonction entre la rainure médiane inclinée (63) et la rainure arrière droite (61), pour empêcher le premier arbre (51) de passer à travers la rainure médiane inclinée (63), et pour permettre au premier arbre (51) de passer seulement à travers la rainure arrière droite (61) à travers la rainure médiane extérieure (64) lorsque le premier arbre (51) coulisse vers l'arrière depuis la rainure avant droite (62) vers la rainure arrière droite (61) ; chaque premier arbre (51) est situé à l'intérieur de la rainure avant droite (62) lorsque le premier cadre (2) et le deuxième cadre (3) sont fermés.

3. Mécanisme de rejet de capsule dans un dispositif d'extraction de boisson tel que revendiqué dans la revendication 2, **caractérisé en ce que** chaque premier arbre (51) est constitué d'un arbre supérieur (511) et d'un l'arbre inférieur (512) dans le même axe longitudinal, l'arbre supérieur (511) fait saillie vers le haut à l'avant de la mâchoire (5), un trou de montage (53) est prévu de manière à déboucher vers le bas au niveau de la surface de fond de l'avant de la mâchoire (5), l'arbre inférieur (512) est situé au niveau du trou de montage (53) et est capable de se déplacer vers le haut et vers le bas, un ressort de support (54) est prévu à l'intérieur du trou de montage (53) pour conserver la tendance de l'arbre inférieur (512) à s'étendre vers le bas et à être exposé à l'extérieur du trou de montage (53), et l'arbre inférieur (512) est situé au niveau de la rainure de guidage (6) correspondante.

4. Mécanisme de rejet de capsule dans un dispositif d'extraction de boisson tel que revendiqué dans la revendication 1, **caractérisé en ce que** la plaque de poussée (7) présente en outre une surface arrière, deux pièces élastiques (73) de forme entrecroisée sont positionnées sur la surface arrière de la plaque de poussée (7), chaque pièce élastique (73) présente deux extrémités, chaque extrémité des pièces élastiques (73) est courbée vers l'arrière.

5. Mécanisme de rejet de capsule dans un dispositif d'extraction de boisson tel que revendiqué dans la revendication 4, **caractérisé en ce qu'**un évidement annulaire (74) est formé sur la surface avant de la plaque de poussée (7), les ouvertures (71) communiquent avec la sortie (21) à travers l'évidement annulaire (74), un filet filtrant (75) est fixé sur la surface arrière de la plaque de poussée (7), les pièces élastiques (73) sont positionnées à l'arrière du filet filtrant (75).

6. Mécanisme de rejet de capsule dans un dispositif d'extraction de boisson tel que revendiqué dans la revendication 1, **caractérisé en ce que** l'extrémité avant de chaque plaque de poussée (9) est positionnée avec l'extrémité de la tige de poussée vers l'arrière (72) à l'extérieur de la paroi latérale avant du premier cadre (2) par l'intermédiaire d'une platine de connexion (92), la première extrémité de la platine de connexion (92) est reliée à l'extrémité avant de la plaque de poussée (9) pour former une pièce intégrée, la deuxième extrémité de la platine de connexion (92) est positionnée avec l'extrémité de la tige de poussée vers l'arrière (72) par l'intermédiaire d'une vis.

7. Mécanisme de rejet de capsule dans un dispositif d'extraction de boisson tel que revendiqué dans la revendication 1, **caractérisé en ce que** la partie avant de chaque mâchoire (5) présente une fente (55) qui la traverse verticalement pour recevoir le bord circulaire (41) de la capsule, la partie avant de chaque mâchoire (5) présente une surface d'extrémité en arc (551) pour retenir le corps partiel de la capsule (4), les deux fentes (55) de deux mâchoires (5), en regard, forment ensemble une pince pour retenir la capsule (4).

8. Mécanisme de rejet de capsule dans un dispositif d'extraction de boisson tel que revendiqué dans la revendication 1, **caractérisé en ce que** le deuxième cadre (3) présente des paroi latérales gauche et droite, quatre saillies (32), chaque paire de saillies (32) sont fixées à l'une des paroi latérales gauche et droite du deuxième cadre (3), deux saillies (32) du même côté sont agencées à intervalles et situées sur la même ligne horizontale, et un trou d'insertion (56) ayant une paroi intérieure est formé sur chaque mâchoire (5) pour le passage des deux saillies (32) ; pour les deux saillies (32) du même côté, la première saillie (32) touche l'extrémité la plus en avant du trou d'insertion (56), tandis que la deuxième saillie (32) touche l'extrémité la plus en arrière du trou d'insertion (56).

9. Mécanisme de rejet de capsule dans un dispositif d'extraction de boisson tel que revendiqué dans l'une quelconque des revendications 1 à 8, **caractérisé en ce que** l'élément élastique (8) est composé de deux ressorts de tension, l'extrémité avant de chacun des ressorts de tension est accrochée sur les plaques de poussée (9) correspondantes du même côté, tandis que l'extrémité arrière de celui-ci est accrochée sur le côté correspondant du boîtier (1).

10. Mécanisme de rejet de capsule dans un dispositif d'extraction de boisson tel que revendiqué dans l'une quelconque des revendications 1 à 8, **caractérisé en ce que** l'élément élastique (8) est un ressort conique, le ressort conique est situé au niveau de la chambre (22) du premier cadre et est supporté entre la paroi latérale avant du premier cadre (2) et la surface latérale avant de la plaque de poussée (7).
